# EUROPEAN PATENT SPECIFICATION

(11) **EP 1 635 591 B1**
(45) Date of publication and mention of the grant of the patent: **31.10.2007**
(21) Application number: 04021719.2
(22) Date of filing: 13.09.2004
(51) Int. Cl.: H04Q 7/38

(54) **Configuring signaling radio bearer information in a user equipment protocol stack**
Konfiguration von Signalisierungsfunkträgers-Information in einem Protokollstapel eines Teilnehmergerätes
Configuration d' information d' un support radio de signalisation dans une pile de protocoles d'un equipment utilisateur

(43) Date of publication of application: 15.03.2006
(73) Proprietor: M-Stack Limited, Birmingham B1 2RX (GB)
(72) Inventor: Farnsworth, Andrew John, Bromsgrove B60 1HW (GB); Norton, Mark Dennis, Worcestershire B61 8HZ (GB)
(74) Representative: Reichl, Wolfgang

(56) References cited:
- EP-A- 1 420 551
- US-A- 5 684 953
- BROWN J J ET AL: "A subset of the ISDN network layer protocol suitable for implementation in hardware" NETWORKS : EVOLUTION OR REVOLUTION? NEW ORLEANS, MAR. 27 - 31, 1988, PROCEEDINGS OF THE ANNUAL JOINT CONFERENCE OF THE COMPUTER AND COMMUNICATIONS SOCIETIES. (INFOCOM), NEW YORK, IEEE, US, vol. CONF. 7, 27 March 1988 (1988-03-27), pages 1065-1071, XP010011776 ISBN: 0-8186-0833-1
- "Universal Mobile Telecommunications System (UMTS); Radio Resource Control (RRC) protocol specification (3GPP TS 25.331 version 5.5.0 Release 5); ETSI TS 125 331" ETSI STANDARDS, EUROPEAN TELECOMMUNICATIONS STANDARDS INSTITUTE, SOPHIA-ANTIPO, FR, vol. 3-R2, no. V550, June 2003 (2003-06), pages 248-259, XP014008824 ISSN: 0000-0001

## Description

### FIELD

The technology described in this patent document relates generally to the field of mobile communication systems. More particularly, the patent document describes a system and method for configuring signaling radio bearer information in a user equipment protocol stack.

### BACKGROUND

UMTS (Universal Mobile Telecommunications System) is a third generation public land mobile telecommunication system. Various standardization bodies publish standards for UMTS, each in their respective areas of competence. For instance, the 3GPP (Third Generation Partnership Project) publishes standards for GSM (Global System for Mobile Communications) and W-CDMA (Wideband Code Division Multiple Access) based UMTS, and the 3GPP2 (Third Generation Partnership Project 2) publishes standards for CDMA2000 (Code Division Multiple Access) based UMTS. Standard document 3GPP TS 25.331 addresses the Radio Resource Control (RRC) protocol specification.

EP 1420551 A2, relating to multimedia broadcast/multicast service MBMS, discloses the setup of a plurality of SRBs between the UE and the RNC. For example 4 SRBs are formed between the UE and the RNC. A message format determining a format of the SRBs between the UE and the RNC is notified to all UEs.

J.J. Brown et alia : "A subset of the ISDN network layer protocol suitable for implementation in hardware", IEEE, 1988, relates to the handling of ISDN signalling messages. Checks for missing mandatory elements or for illegal information within legal messages are performed based on the information element types.

### SUMMARY

In accordance with the teachings described herein, systems and methods are provided for configuring signaling radio bearer information. A wireless network may be used that includes a radio access network for transmitting information between a user equipment device and a core network. An instruction may be received to generate a signaling radio bearer configuration information element (IE) that includes configuration information for a pre-selected number of signaling radio bearers. The signaling radio bearer configuration IE may then be generated, while ensuring that the signaling radio bearer configuration IE includes configuration information for a required minimum number of signaling radio bearers. The signaling radio bearer configuration information element may be transmitted from the radio access network to the user equipment device for use in configuring signaling radio bearers in the user equipment device.

A signaling radio bearer configuration information element (IE) may be received by the user equipment device and include configuration information for a pre-selected number of signaling radio bearers. The user equipment device may determine whether the received signaling radio bearer configuration IE includes configuration information for a required minimum number of signaling radio bearers. If the received signaling radio bearer configuration IE does not include configuration information for the required minimum number of signaling radio bearers, then the user equipment device may identify the received signaling radio bearer configuration IE as an anomalous information element.

### BRIEF DESCRIPTION OF THE DRAWINGS

Fig. 1 is a block diagram illustrating a typical third generation (3G) wireless network;
Fig. 2 is a block diagram of a typical core network;
Fig. 3 is a diagram illustrating a typical UMTS control plane architecture between a user equipment device and an SGSN;
Fig. 4 is a block diagram illustrating an example Signaling RB Information To Setup List information element for configuring signaling radio bearers in the RRC layer of a user equipment device;
Fig. 5 illustrates an example of a non-compliant Signaling RB Information To Setup List IE that improperly specifies the same signaling radio bearer (SRB1) twice;
Fig. 6 illustrates another example of a non-compliant Signaling RB Information To Setup List IE that does not include configuration information for a necessary signaling radio bearer;
Figs. 7-9 illustrate three example methods for configuring signaling radio bearer information in a user equipment protocol stack; and
Fig. 10 is a block diagram illustrating an example mobile communication device that may be used as the user equipment device described herein.

### DETAILED DESCRIPTION

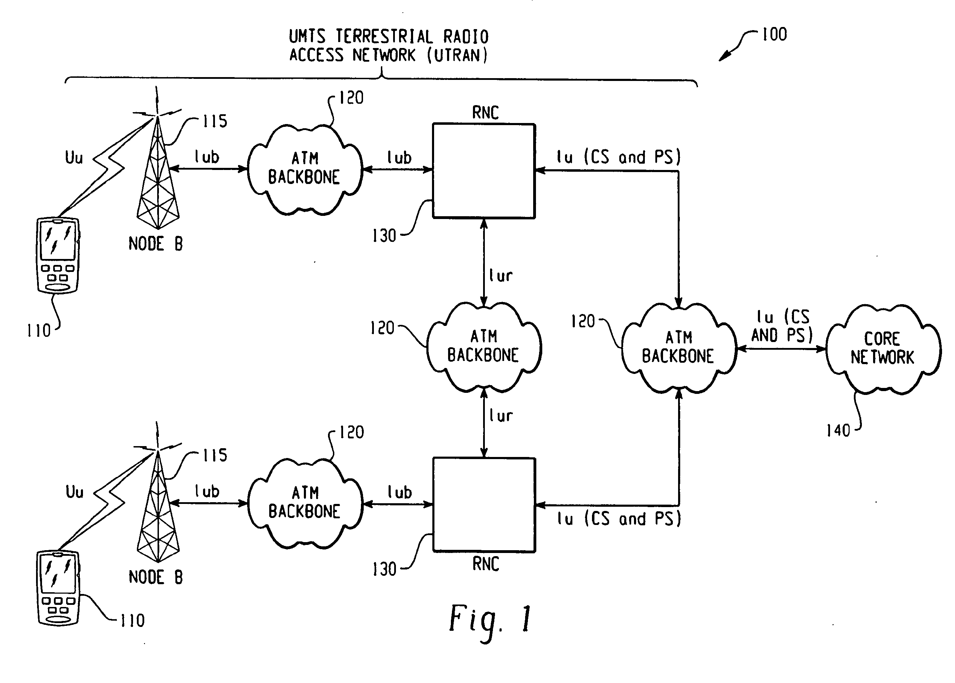

With reference now to the drawing figures, Fig. 1 is a block diagram illustrating a typical third generation (3G) wireless network. The wireless network includes a Universal Mobile Telecommunications System (UMTS) Terrestrial Radio Access Network (UTRAN) 100 coupled via an ATM backbone 120 to a core network 140. Also illustrated are a plurality of user equipment devices 110 that may communicate wirelessly using the wireless network.

The UTRAN 100 includes multiple base stations 115 (referred to as Node B's), of which only two are illustrated, to communicate wirelessly using radio waves over the Uu interface with the user equipment devices 110. Depending on the capabilities of a particular UTRAN 100, an RNC 130 may support multiple Node B's 115 of the same mode or multiple Node B's operating in diverse modes. The ATM (Asynchronous Transfer Mode) backbone 120 couples the various UTRAN components together, and couples the UTRAN 100 to the core network 140.

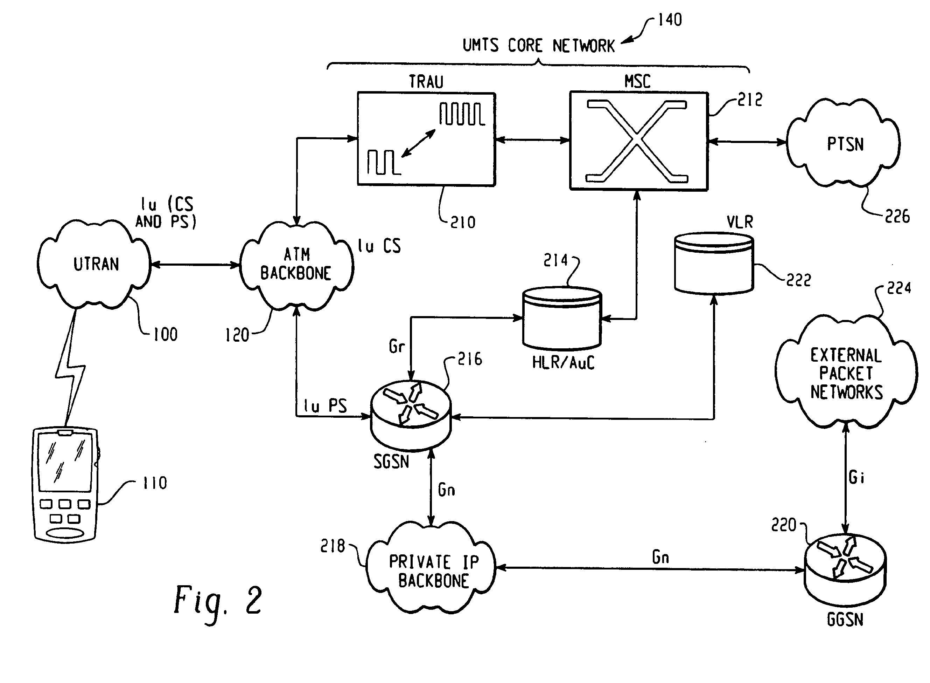

Fig. 2 is a block diagram of a typical core network 140. Also illustrated is a user equipment device 110, which co-operates with the UTRAN 100 to communicate with the core network 140 via an ATM backbone 120. In operation, circuit switched (CS) packets may be sent and received via a transcoder/rate adapter unit (TRAU) 210, which converts UMTS speech packets to standard packets for a mobile switching center (MSC) 212 in order to communicate speech over a public switched telephone network (PSTN) 226. In addition, packet switched (PS) packets may be sent and received via a serving GPRS (General Packet Radio Service) support node (SGSN) 216, private IP backbone 218, Gateway GPRS Support Node (GGSN) 220, and external packet network 224.

Also included in the core network 140 are a visitor location register (VLR) 222 and a home location register/authentication center (HLR/AuC) 214. The VLR 222 stores the user equipment 110 information required for call handling and other functions within an associated service area. The HLR/AuC 214 stores permanent records used to identify the user equipment 110, and may also store temporary records, such as SGSN and VLR addresses.

In a typical 3G wireless network, three sets of protocols are used for transmitting data between the UTRAN and a user equipment device -- the control plane protocols, the user plane protocols and the transport network user plane protocols. The user plane protocols implement radio bearer service by carrying user data through the access stratum. The control plane protocols are used to control the radio access bearers and the connection between UTRAN and user equipment.

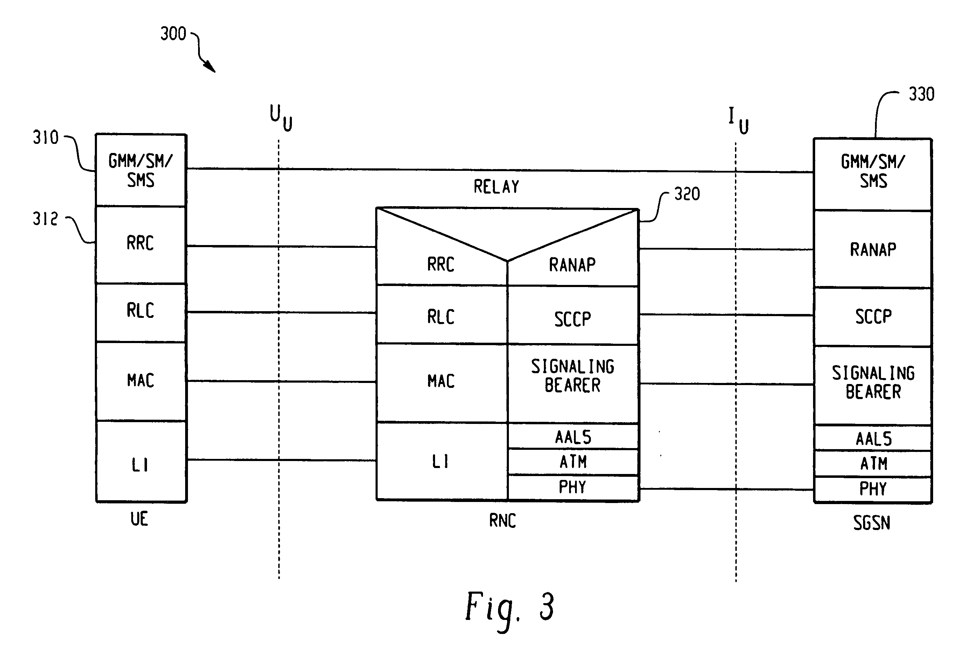

Fig. 3 is a diagram illustrating a typical UMTS control plane architecture 300 between a user equipment device and an SGSN. The control plane architecture 300 includes a user equipment control plane protocol stack 310, an RNC control plane protocol stack 320 and an SGSN control plane protocol stack 330. In particular, the RRC layer 312 is responsible for the overall control of radio resources for the user equipment device. Among other radio resource control functions, the RRC layer 312 is responsible for the establishment, reconfiguration and release of radio bearers (i.e., services provided for transferring data between the user equipment and the UTRAN). Radio bearers available for transmitting RRC messages are referred to as "signaling radio bearers" and are configured by the UTRAN in a Signaling Radio Bearer (RB) Information To Setup List information element (IE) that is transmitted from the UTRAN to the RRC in the user equipment device.

A more detailed description of a typical 3G wireless network, as illustrated in Figs. 1-3, is provided in the *International Mobile Telecommunications-2000* (IMT-2000) standard published by the International Telecommunications Union (ITU) and in the 3GPP standards documents published by the Third Generation Partnership Project (3GPP™), including standards documents 3GPP TS 23.101, 3GPP TS 25.301, 3GPP TS 25.331, and 3GPP TS 25.401.

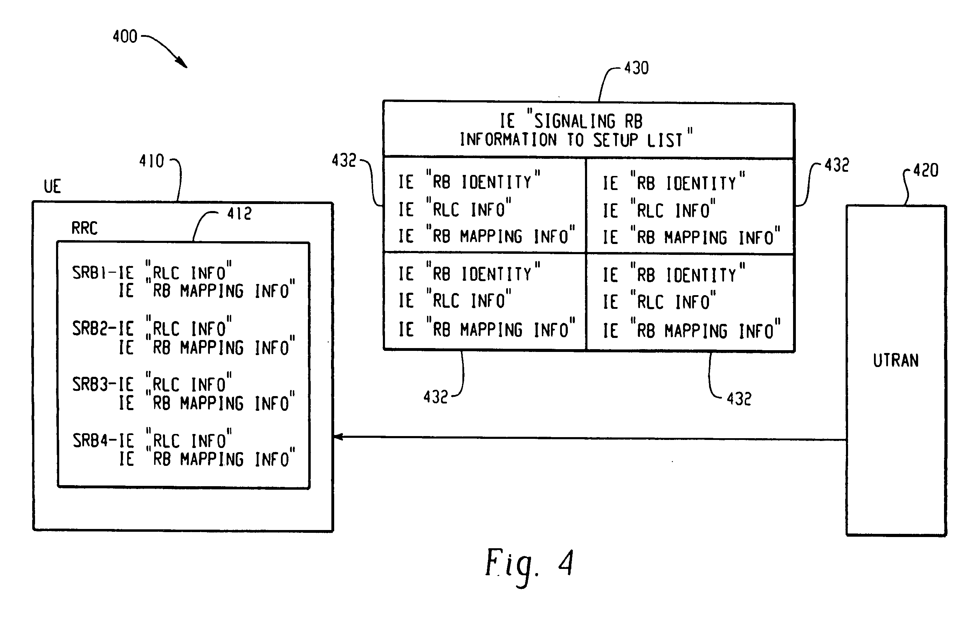

Fig. 4 is a block diagram 400 illustrating an example Signaling RB Information To Setup List IE 430 for configuring signaling radio bearers in the RRC layer 412 of a user equipment device 410. The Signaling RB Information To Setup List 430 is transmitted from the UTRAN 420 and includes a set of information elements 432 for each signaling radio bearer (SRB) to be configured. The Signaling RB Information To Setup List IE 430 may, for example, be a list where each element has the following ASN.1 structure.

```
         SRB-InformationSetup : : = SEQUENCE {
         rb-Identity        RB-Identity OPTIONAL,
         rlc-InfoChoice     RLC-InfoChoice,
         rb-MappingInfo     RB-MappingInfo}
```

In accordance with standards document 3GPP TS 25.331, three signaling radio bearers (SRB1-SRB3) need to be configured for use with messages sent on a Dedicated Control Channel (DCCH), and one signaling radio bearer (SRB4) is optional. Under the standards documents, SRB 1 is to be used for all messages sent on the DCCH when using RLC unacknowledged mode (RLC-UM). SRB 2 is to used for all messages sent on the DCCH when using RLC acknowledged mode, except for RRC messages carrying higher layer (NAS) signaling. SRB 3 and optionally SRB4 is to be used for RRC messages carrying higher layer (NAS) signaling and sent on the DCCH in RLC acknowledged mode.

The sets of information elements 432 transmitted in the Signaling RB Information To Setup List 430 from the UTRAN 420 are used by the RRC 412 to configure the signaling radio bearers. Information elements within the sets 432 may include an RB Identity information element, an RLC Info information element and an RB Mapping Info information element. The RB Identity information element is used to identify which signaling radio bearer (SRB1-SRB4) is to be configured by each set of information elements 432. The RB Mapping Info and RLC Info information elements are used to configure the signaling radio bearer identified by the RB Identity information element. More specifically, the RB Mapping Info information element is used to configure the multiplexing options for the identified signaling radio bearer, and the RLC Info information element is used to configure the transmitting and receiving RLC entities for the identified signaling radio bearer.

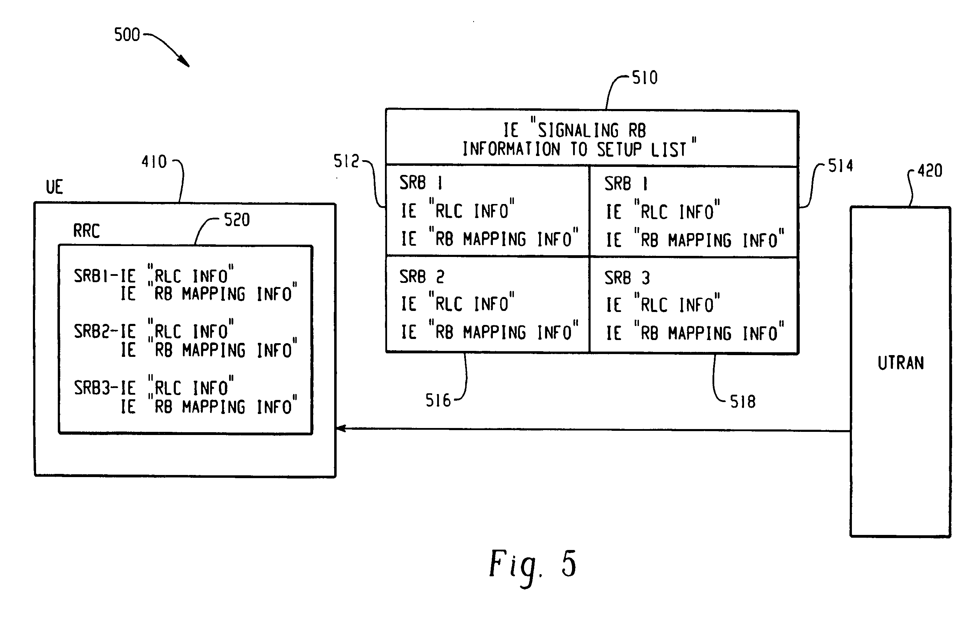

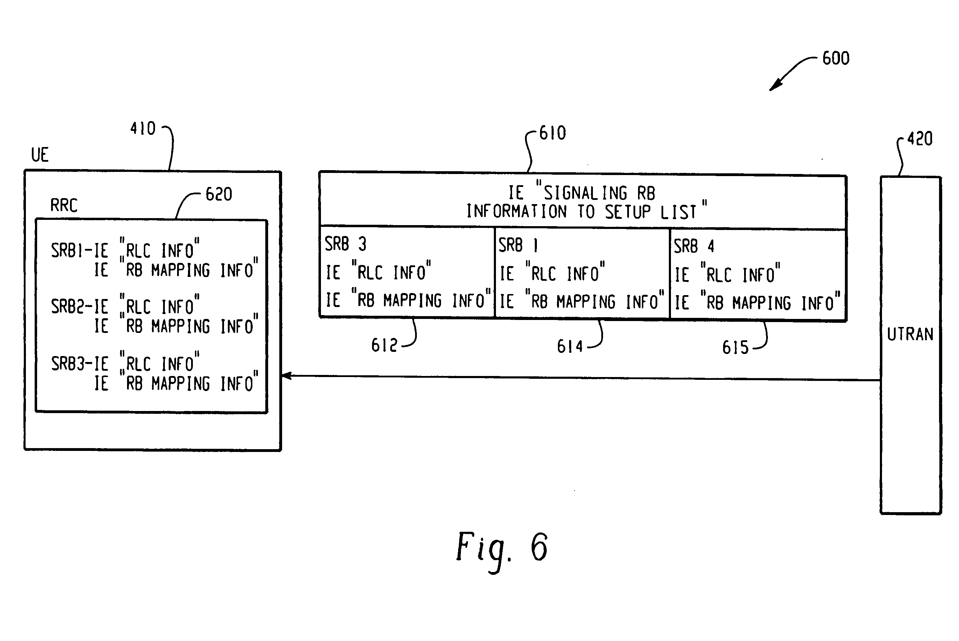

If the Signaling RB Information To Setup List IE 430 is included in an RRC Connection Setup Message from the UTRAN 420, then the standards require that the IE 430 configures each of SRB1-SRB3 and optionally SRB4. That is each of SRB1-SRB3 and optionally SRB4 should be identified and configured by the Signaling RB Information To Setup List IE 430. However, Figs. 5 and 6 illustrate two examples of non-compliant Signaling RB Information To Setup List IEs 510, 610 that do not include the proper configuration information.

Fig. 5 illustrates an example of a non-compliant Signaling RB Information To Setup List IE 510 that improperly specifies the same signaling radio bearer (SRB1) twice. In this example 500, the non-compliant Signaling RB Information To Setup IE 510 includes four sets of information elements 512, 514, 516, 518. Two of the sets 512, 514 include RB Identity information elements that specify the same signaling radio bearer - SRB1. The other two information element sets 516, 518 specify SRB2 and SRB 3, respectively.

Fig. 6 illustrates another example of a non-compliant Signaling RB Information To Setup List IE 600 that does not include configuration information for a necessary signaling radio bearer. As noted above, the standards documents require that signaling radio bearers SRB1-SRB3 be configured if the SRB list 610 is sent in an RRC Connection Setup Message. However, the illustrated Signaling RB Information To Setup List IE 600 only includes configuration information 612, 614, and 615 for SRB1, SRB3 and SRB4. It should be noted that if the Signaling RB Information To Setup List 610 is included in a message other than an RRC Connection Setup Message, then the standards do not require that any SRBs be configured.

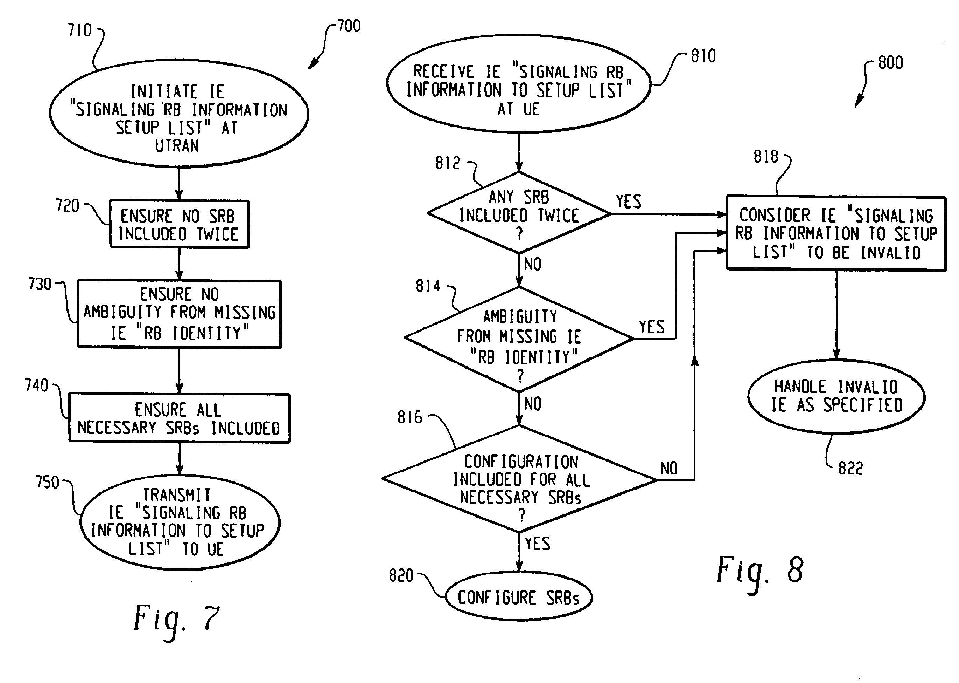

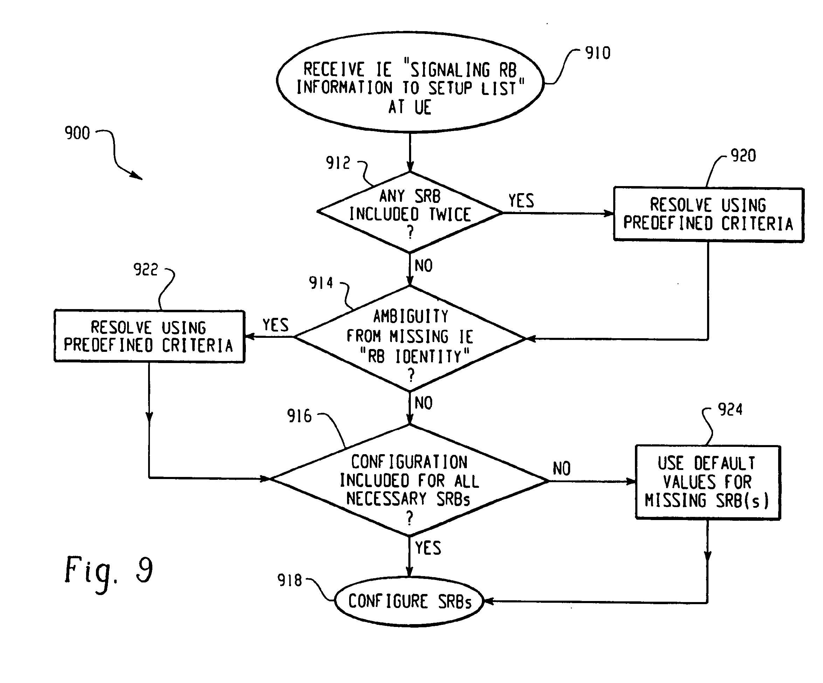

Figs. 7-9 illustrate three example methods 700, 800, 900 for configuring signaling radio bearer information in a user equipment protocol stack. These example methods help to ensure that the signaling radio bearers (SRB1-SRB4) are properly configured in accordance with the standards documents. Fig. 7 is a method 700 that may be performed at the UTRAN 420 and Figs. 8 and 9 are methods 800, 900 that may be performed by a user equipment device 410.

With reference first to Fig. 7, the method begins at step 710 when the UTRAN receives an instruction to initiate a Signaling RB Information Setup List to configure a user equipment device 410. At step 720, the UTRAN 420 processes the configuration information to ensure that the sets of information elements to be included in the Signaling RB Information Setup List do not specify the same signaling radio bearer twice, as shown in Fig. 5.

At step 730, the UTRAN 420 ensures that there are no radio bearer identity IEs missing from the Signaling RB Information Setup List that would result in an ambiguity under the 3G standard documents. Standard document 3GPP TS 25.331, version 3.10.0, includes two sections, 8.6.4.1 and 11.3, that both address the situation in which radio bearer identity IEs are missing from the Signaling RB Information Setup List. Section 8.6.4.1 requires that in the event of a missing radio bearer identity IE (i.e., an unnumbered SRB), the UE "apply a default value of the IE 'RB identity' equal to 1 for the first IE 'Signaling RB information to setup,' and increase the default value by 1 for each occurrence." However, section 11.3 of the standard document requires that if the IE "RB identity" is missing from a Signaling RB Information Setup List, then the smallest unused value is to be used. In some cases, the application of sections 8.6.4.1 and 11.3 may achieve different results. Step 730 prevents the UTRAN from creating a Signaling RB Information Setup List that would result in an ambiguity between sections 8.6.4.1 and 11.3 of the standard document 3GPP TS 25.331, version 3.10.0. This may be achieved by either ensuring that radio bearer identity IEs (i.e., IE "RB identity") are included for each signaling radio bearer configuration in the Signaling RB Information Setup List or by ensuring that no radio bearer identity IEs are included in the Signaling RB Information Setup List.

At step 740, the UTRAN 420 ensures that configurations are included in the Signaling RB Information To Setup List for necessary signaling radio bearers (i.e., SRBs required by the applicable 3G standard). The UTRAN 420 may, for example, ensure that each of SRB1-SRB3 have either already been configured on the user equipment device 410 or that necessary configurations are included in the Signaling RB Information To Setup List IE. The Signaling RB Information To Setup List IE is then transmitted from the UTRAN 420 to the user equipment device 410 at step 750.

With reference to Fig. 8, the method 800 begins at step 810 when the user equipment device 410 receives a Signaling RB Information To Setup List IE from the UTRAN 420. At step 812, the user equipment device 410 determines if the received Signaling RB Information To Setup List IE specifies the same signaling radio bearer (SRB) twice, as shown in Fig. 5. If so, then the method identifies the received IE as an invalid or anomalous Signaling RB Information To Setup List at step 818. Otherwise, if no two SRBs are identified more than once in the Signaling RB Information To Setup List, then the method proceeds to step 814.

At step 814, the method 800 determines if any signaling radio bearer identity IEs are missing from the Signaling RB Information Setup List that would result in an ambiguity under sections 8.6.4.1 and 11.3 of standard document 3GPP TS 25.331, version 3.10.0, as described above with reference to Fig. 7. If so, then the method 800 identifies the received IE as an invalid or anomalous Signaling RB Information To Setup List at step 818. Otherwise, if no signaling radio bearer identity IEs are omitted that would result in an ambiguity under the 3G standard documents, then the method proceeds to step 816.

At step 816, the method 800 determines if the Signaling RB Information To Setup List includes configuration information for all of the necessary signaling radio bearers (i.e., SRBs required by the applicable 3G standard) that have not already been configured on the user equipment device 410. If all of the necessary SRB configuration information is not included, then the method 800 identifies the received IE as an invalid or anomalous Signaling RB Information To Setup List at step 818. Otherwise, if all of the necessary SRB configuration information is included in the received Signaling RB Information To Setup List, then the configuration information is used to configure the signaling radio bearers at step 820.

If the received Signaling RB Information To Setup List IE is identified as invalid or anomalous at step 818, then the method 800 processes the IE in accordance with a pre-determined procedure at step 822. For example, in accordance with the 3G standards, the user equipment device may report an invalid or anomalous IE to the UTRAN and receive a new RRC Connection Setup Message or may return to an idle state without notifying the UTRAN of the invalid or anomalous IE.

With reference now to Fig. 9, another example method 900 begins at step 910 when a Signaling RB Information To Setup List is received by a user equipment device 410. At step 912, the user equipment device 410 determines if the received Signaling RB Information To Setup List IE specifies the same signaling radio bearer (SRB) twice, as shown in Fig. 5. If no two SRBs are identified more than once in the Signaling RB Information To Setup List, then the method proceeds to step 914. Otherwise, if multiple occurrences of an SRB are identified in step 912, then the method resolves the anomalous IE using a pre-defined criteria at step 920. For example, if an SRB is included twice, then at step 920 the user equipment device 410 may define one of the occurrences (e.g., the first or last occurrence) as the configuration to be used, with all other occurrences being ignored. Upon resolving the multiple SRBs, the method proceeds to step 914.

At step 914, the method 900 determines if any signaling radio bearer identity IEs are missing from the Signaling RB Information Setup List that would result in an ambiguity under sections 8.6.4.1 and 11.3 of standard document 3GPP TS 25.331, version 3.10.0, as described above with reference to Fig. 7. If not, then the method proceeds to step 916. If one or more signaling radio bearer identity IEs are omitted that would result in an ambiguity under the 3G standard documents, however, then the method 900 resolves the anomalous IE using a pre-determined criteria at step 922. For example, the pre-determined criteria 922 may instruct the UE to resolve the one or more missing SRB identity IEs using the defaults set forth in one of section 8.6.4.1 or section 11.3 of standard document 3GPP TS 25.331, version 3.10.0.

At step 916, the method 900 determines if the Signaling RB Information To Setup List includes configuration information for all of the necessary signaling radio bearers (i.e., SRBs required by the applicable 3G standard) that have not already been configured on the user equipment device 410. If all of the necessary SRB configuration information is included, then the method 900 proceeds to configure the signaling radio bearers at step 918. Otherwise, if configuration information for one or more necessary SRBs is not included, then the method resolves the anomalous IE by selecting default configuration values for the one or more SRBs at step 924. Upon resolving the missing configuration error at step 924, the method 900 proceeds to step 918 to configure the signaling radio bearers.

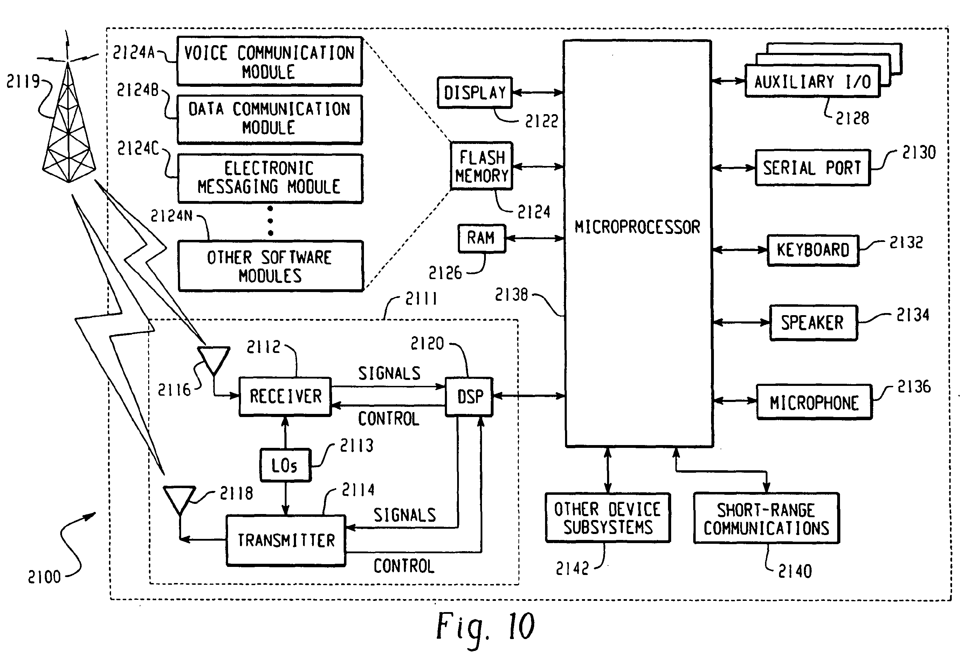

Fig. 10 is a block diagram illustrating an example mobile communication device 2100 that may be used as the user equipment device described above. The mobile device 2100 includes a processing subsystem 2138, a communications subsystem 2111, a short-range communications subsystem 2140, a memory subsystem 2124, 2126, and various other device subsystems and/or software modules 2142. The mobile device 2100 also includes a user interface, which may include a display 2122, a serial port 2130, keyboard 2132, a speaker 2134, a microphone 2136, one or more auxiliary input/output devices 2128, and/or other user interface devices.

The processing subsystem 2138 controls the overall operation of the mobile device 2100. Operating system software executed by the processing subsystem 2138 may be stored in a persistent store, such as a flash memory 2124, but may also be stored in other types of memory devices in the memory subsystem, such as a read only memory (ROM) or similar storage element. In addition, system software, specific device applications, or parts thereof, may be temporarily loaded into a volatile store, such as a random access memory (RAM) 2126. Communication signals received by the mobile device 2100 may also be stored to RAM 2126.

The processing subsystem 2138, in addition to its operating system functions, enables execution of software applications 2124 on the device 2100. A predetermined set of applications that control basic device operations, such as data and voice communications, may be installed on the device 2100 during manufacture. In addition, a personal information manager (PIM) application, including an electronic messaging application, may be installed on the device. The PIM may, for example, be operable to organize and manage data items, such as e-mail, calendar events, voice mails, appointments, and task items. The PIM application may also be operable to send and receive data items via the wireless network 2119.

Communication functions, including data and voice communications, are performed through the communication subsystem 2111, and possibly through the short-range communications subsystem 2140. The communication subsystem 2111 includes a receiver 2112, a transmitter 2114 and one or more antennas 2116, 2118. In addition, the communication subsystem 2111 also includes a processing module, such as a digital signal processor (DSP) 2120 or other processing device(s), and local oscillators (LOs) 2113. The specific design and implementation of the communication subsystem 2111 is dependent upon the communication network in which the mobile device 2100 is intended to operate. For example, a mobile device 2100 may include a communication subsystem 2111 designed to operate within the Mobitex^{™} mobile communication system, the DataTAC^{™} mobile communication system, a GSM network, a GPRS network, a UMTS network, and/or an EDGE network.

Network access requirements vary depending upon the type of communication system. For example, in the Mobitex and DataTAC networks, mobile devices are registered on the network using a unique personal identification number or PIN associated with each device. In UMTS and GSM/GPRS networks, however, network access is associated with a subscriber or user of a device. A GPRS device therefore requires a subscriber identity module, commonly referred to as a SIM card, in order to operate on a GSM/GPRS network.

When required network registration or activation procedures have been completed, the mobile device 2100 may send and receive communication signals over the communication network 2119. Signals received by the antenna 2116 from the communication network 2119 are routed to the receiver 2112, which provides signal amplification, frequency down conversion, filtering, channel selection, etc., and may also provide analog to digital conversion. Analog-to-digital conversion of the received signal allows the DSP to perform more complex communication functions, such as demodulation and decoding. In a similar manner, signals to be transmitted to the network 2119 are processed (e.g., modulated and encoded) by the DSP 2120 and are then provided to the transmitter 2114 for digital to analog conversion, frequency up conversion, filtering, amplification and transmission to the communication network 2119 (or networks) via the antenna 2118.

In addition to processing communication signals, the DSP 2120 provides for receiver 2112 and transmitter 2114 control. For example, gains applied to communication signals in the receiver 2112 and transmitter 2114 may be adaptively controlled through automatic gain control algorithms implemented in the DSP 2120.

In a data communication mode, a received signal, such as a text message or web page download, is processed by the communication subsystem 2111 and input to the processing device 2138. The received signal is then further processed by the processing device 2138 for output to a display 2122, or alternatively to some other auxiliary I/O device 2128. A device user may also compose data items, such as e-mail messages, using a keyboard 2132 and/or some other auxiliary I/O device 2128, such as a touchpad, a rocker switch, a thumb-wheel, or some other type of input device. The composed data items may then be transmitted over the communication network 2119 via the communication subsystem 2111.

In a voice communication mode, overall operation of the device is substantially similar to the data communication mode, except that received signals are output to a speaker 2134, and signals for transmission are generated by a microphone 2136. Alternative voice or audio I/O subsystems, such as a voice message recording subsystem, may also be implemented on the device 2100. In addition, the display 2122 may also be utilized in voice communication mode, for example, to display the identity of a calling party, the duration of a voice call, or other voice call related information.

The short-range communications subsystem 2140 enables communication between the mobile device 2100 and other proximate systems or devices, which need not necessarily be similar devices. For example, the short-range communications subsystem 2140 may include an infrared device and associated circuits and components, or a Bluetooth^{™} communication module to provide for communication with similarly-enabled systems and devices.

This written description uses examples to disclose the invention, including the best mode, and also to enable a person skilled in the art to make and use the invention.

## Claims

1. A method, in a wireless network including a radio access network (100) for transmitting information between a user equipment device (110) and a core network (140), of configuring signaling radio bearers in the user equipment device, said method comprising:
receiving an instruction to generate (710) a signaling radio bearer configuration information element IE (510) that includes configuration information for a pre-selected number of signaling radio bearers;
generating the signaling radio bearer configuration IE, ensuring that the signaling radio bearer configuration IE includes configuration information for a required minimum number of signaling radio bearers (740); and
transmitting (750) the signaling radio bearer configuration information element from the radio access network (100) to the user equipment device (110) for use in configuring the signaling radio bearers in the user equipment device (110).

2. The method of claim 1, further comprising:
ensuring that each signaling radio bearer is not configured more than once.

3. The method of claim 2, wherein the configuration information for each signaling radio bearer is identified by a radio bearer identity information element IE.

4. The method according to one of the claims 1 to 3, the generating step further comprising:
ensuring either that the configuration information for each signal radio bearer is identified by a radio bearer identify information element IE or that the configuration information includes no radio bearer identity IEs.

5. The method according to one of the claims 1 to 4, wherein the signaling radio bearer configuration IE is a Signaling Radio Bearer Information To Setup List, which is transmitted to the user equipment device in an RRC Connection Setup Message.

6. The method according to one of the claims 1 to 5, wherein the wireless network is a third generation 3G wireless network.

7. The method of claim 6, wherein the wireless network includes a Universal Mobile Telecommunications System UMTS Terrestrial Radio Access Network UTRAN.

8. The method of claim 7, wherein the signaling radio bearer configuration IE is generated by the UTRAN and is transmitted from the UTRAN to the user equipment device.

9. The method according to one of the claims 1 to 8, wherein the required minimum number of signaling radio bearers includes a first signaling radio bearer SRB1 that is used for all messages transmitted on a dedicated control channel DCCH when using radio link control RLC unacknowledged mode RLC-UM, a second signaling radio bearer SRB2 that is used for all messages transmitted on the DCCH when using RLC acknowledged mode except for radio resource control RRC messages carrying higher layer signaling, and a third signaling radio bearer SRB3 that is used for RRC messages carrying higher layer signaling and sent on the DCCH in RLC acknowledged mode.

10. The method according to one of the claims 8 to 9, wherein the configuration information includes an RLC Info information element and a RB Mapping information element.

11. A method, in a wireless network including a radio access network (100) for transmitting information between a user equipment device (110) and a core network (140), of configuring signaling radio bearers in the user equipment device, said method comprising:
receiving (810) a signaling radio bearer configuration information element IE (510) with the user equipment device, the signaling radio bearer configuration IE including configuration information for a pre-selected number of signaling radio bearers;
determining (812) whether the configuration information for more than one signaling radio bearer is identified by the same signaling radio bearer identity information element IE; and
if the configuration information for more than one signaling radio bearer is identified by the same signaling radio bearer identity information element IE, then identifying (818) the received signaling radio bearer configuration IE as an anomalous information element.

12. The method of claim 11, further comprising:
if the configuration information for more than one signaling radio bearer is identified by the same signaling radio bearer identity information element IE, then selecting one instance of the signaling radio bearer identity ID based on a pre-selected criteria.

13. The method of claim 11, further comprising:
if the configuration information for more than one signaling radio bearer is identified by the same signaling radio bearer identity information element IE, then rejecting the received signaling radio bearer IE, transmitting a report from the user equipment device that identifies the anomalous information element and requests a new signaling radio bearer configuration IE.

14. The method according to one of the claims 11 to 13, further comprising:
if the received signaling radio bearer configuration IE is identified as an anomalous information element because it includes the same identity information element for more than one signaling radio bearer, then rejecting the received signaling radio bearer configuration IE and entering an idle state.

15. The method according to one of the claims 11 to 14, wherein the configuration information for each signaling radio bearer is identified by a signaling radio bearer identity information element IE, further comprising:
determining whether the received signaling radio bearer configuration IE includes configuration information for a required minimum number of signaling radio bearers; and
if the received signaling radio bearer configuration IE does not include configuration information for the required minimum number of signaling radio bearers, then identifying the received signaling radio bearer configuration IE as an anomalous information element.

16. The method of claim 15, further comprising:
if the received signaling radio bearer configuration IE is identified as an anomalous information element because it does not include configuration information for the required minimum number of signaling radio bearers, then configuring signaling radio bearers that are not included using default configuration values.

17. The method of claim 15, further comprising:
if the received signaling radio bearer configuration IE is identified as an anomalous information element because it does not include configuration information for the required minimum number of signaling radio bearers, then transmitting a report from the user equipment device that requests a new signaling radio bearer configuration IE.

18. The method of claim 15, further comprising:
if the received signaling radio bearer configuration IE is identified as an anomalous information element because it does not include configuration information for the required minimum number of signaling radio bearers, then ignoring the received signaling radio bearer configuration IE and entering an idle state.

19. The method according to one of the claims 11 to 18, wherein the configuration information for each signaling radio bearer is identified by a signaling radio bearer identity information element IE, further comprising:
determining whether the received signaling radio bearer configuration includes a signaling radio bearer identity information element IE for each signaling radio bearer; and
if the received signaling radio bearer configuration IE does not include a signaling radio bearer identity information element IE for each signaling radio bearer, then identifying the received signaling radio bearer configuration IE as an anomalous information element.

20. The method of claim 19, further comprising:
if the received signaling radio bearer configuration IE is identified as an anomalous information element because it does not include a signaling radio bearer identity IE for each signaling radio bearer, then transmitting a report from the user equipment device that requests a new signaling radio bearer configuration IE.

21. The method of claim 19, further comprising:
if the received signaling radio bearer configuration IE is identified as an anomalous information element because it does not include a signaling radio bearer identity IE for each signaling radio bearer, then ignoring the received signaling radio bearer configuration IE and entering an idle state.

22. The method of claim 19, further comprising:
if the received signaling radio bearer configuration IE is identified as an anomalous information element because it does not include a signaling radio bearer identity IE for each signaling radio bearer, then assigning default values for each of the missing signal radio bearer identity IEs.

23. The method of claim 22, wherein the default values are selected from a set of signal radio bearer identity IEs beginning with the first unused value.

24. The method of claim 22, wherein the default values are selected based on the order in which the signaling radio bearer is listed in the received signaling radio bearer configuration IE.

25. The method according to one of the claims 11 to 24, wherein the signaling radio bearer configuration IE is a Signaling Radio Bearer Information To Setup List, which is transmitted to the user equipment device in an RRC Connection Setup Message.

26. The method of claim 25, wherein the wireless network includes a Universal Mobile Telecommunications System UMTS Terrestrial Radio Access Network UTRAN.

27. The method of claim 26, wherein the signaling radio bearer configuration IE is generated by the UTRAN and is transmitted from the UTRAN to the user equipment device.

28. The method according to one of the claims 11 to 27, wherein the required minimum number of signaling radio bearers includes a first signaling radio bearer SRB1 that is used for all messages transmitted on a dedicated control channel DCCH when using radio link control RLC unacknowledged mode RLC-UM, a second signaling radio bearer SRB2 that is used for all messages transmitted on the DCCH when using RLC acknowledge mode except for radio resource control RRC messages carrying higher layer signaling, and a third signaling radio bearer SRB3 that is used for RRC messages carrying higher layer signaling and sent on the DCCH in RLC acknowledge mode.

29. The method of claim 28, wherein the configuration information includes an RLC Info information element and a RB Mapping information element.

## Patentansprüche

1. Verfahren in einem drahtlosen Netzwerk, einschließlich ein Funkzugriffsnetzwerk (100) zum Übertragen von Information zwischen einer Benutzervorrichtung (110) und einem Kernnetzwerk (140), zum Konfigurieren von Signalisierungsfunkträgern in der Benutzervorrichtung, wobei das Verfahren aufweist:
Empfangen einer Anweisung, ein Signalisierungsfunkträger - Konfigurations-Informationselement IE (510) zu erzeugen, das eine Konfigurationsinformation für eine vorgewählte Anzahl von Signalisierungsfunkträgern umfasst;
Erzeugen des Signalisierungsfunkträger -Konfigurations-IE, um sicher zu stellen, dass das Signalisierungsfunkträger -Konfigurations-IE eine Konfigurationsinformation für eine erforderliche minimale Anzahl von Signalisierungsfunkträgern umfasst(740); und
Übertragen (750) des Signalisierungsfunkträger-Konfigurations-Informationselements von dem Funkzugriffsnetzwerk (100) an die Benutzervorrichtung (110) zur Verwendung bei der Konfiguration der Signalisierungsfunkträger in der Benutzervorrichtung (110).

2. Verfahren gemäß Anspruch 1, das weiter aufweist:
Sicherstellen, dass jeder Signalisierungsfunkträgernicht mehr als einmal konfiguriert wird.

3. Verfahren gemäß Anspruch 2, wobei die Konfigurationsinformation für jeden Signalisierungsfunkträger durch ein Signalisierungsfunkträger Informationselement IE identifiziert wird.

4. Verfahren gemäß einem der Ansprüche 1 bis 3, wobei der erzeugende Schritt weiter aufweist:
Sicherstellen, dass die Konfigurationsinformation für jeden Signalisierungsfunkträger durch ein Funkträger-Informationselement IE identifiziert wird oder dass die Konfigurationsinformation keine Funkträgeridentitäts-IEs umfasst.

5. Verfahren gemäß einem der Ansprüche 1 bis 4, wobei das Signalisierungsfunkträger-Konfigurations-IE eine Aufbau-Signalisierungsfunkträger-Informations-Liste ist, die an die Benutzervorrichtung in einer RRC-Verbindungs-Aufbau-Nachricht übertragen wird.

6. Verfahren gemäß einem der Ansprüche 1 bis 5, wobei das drahtlose Netzwerk ein drahtloses Netzwerk der dritten Generation 3G ist.

7. Verfahren gemäß Anspruch 6, wobei das drahtlose Netzwerk ein terrestrisches UMTS(Universal Mobile Telecommunications System)-Funkzugriffsnetzwerk UTRAN umfasst.

8. Verfahren gemäß Anspruch 7, wobei das Signalisierungsfunkträger-Konfigurations-IE durch das UTRAN erzeugt wird und von dem UTRAN an die Benutzervorrichtung übertragen wird.

9. Verfahren gemäß einem der Ansprüche 1 bis 8, wobei die erforderliche minimale Anzahl von Signalisierungsfunkträgern einen ersten Signalisierungsfunkträger SRB 1 umfasst, der verwendet wird für alle Nachrichten, die auf einem zugewiesenen Steuerkanal DCCH (dedicated control channel) übertragen werden, wenn ein unbestätigter Funkverbindungssteuerungs-RLC(radio link control)-Modus RLC-UM (radio link control unacknowledged mode) verwendet wird, einen zweiten Signalisierungsfunkträger SRB2, der verwendet wird für alle Nachrichten, die auf dem DCCH übertragen werden bei der Verwendung des bestätigten RLC-Modus, außer für Funkressourcensteuerungs-RRC(radio resource control)-Nachrichten, die eine höherschichtige Signalisierung tragen, und einen dritten Signalisierungsfunkträger SRB3, der für RRC-Nachrichten verwendet wird, die eine höherschichtige Signalisierung tragen und auf dem DCCH in einem bestätigten RLC-Modus gesendet werden.

10. Verfahren gemäß einem der Ansprüche 8 bis 9, wobei die Konfigurationsinformation ein RLC-Info-Informationselement und ein RB-Abbildungs-Informationselement umfasst.

11. Verfahren in einem drahtlosen Netzwerk, einschließlich ein Funkzugriffsnetzwerk (100) zum Übertragen von Information zwischen einer Benutzervorrichtung (110) und einem Kernnetzwerk (140), zum Konfigurieren von Signalisierungsfunkträgern in der Benutzervorrichtung, wobei das Verfahren aufweist:
Empfangen (810) eines Signalisierungsfunkträger-Konfigurations-Informationselements IE (510) an der Benutzervorrichtung, wobei das Signalisierungsfunkträger-Konfigurations-IE eine Konfigurationsinformation für eine vorgewählte Anzahl von Signalisierungsfunkträgern umfasst;
Bestimmen (812), ob die Konfigurationsinformation für mehr als einen Signalisierungsfunkträger durch dasselbe Signalisierungsfunkträger-Identitäts-Informationselement IE identifiziert wird; und,
wenn die Konfigurationsinformation für mehr als einen Signalisierungsfunkträger durch dasselbe Signalisierungsfunkträger-Identitäts-Informationselement IE identifiziert wird, dann Identifizieren (818) des empfangenen Signalisierungsfunkträger-Konfigurations-IE als ein abnormes Informationselement.

12. Verfahren gemäß Anspruch 11, das weiter aufweist:
wenn die Konfigurationsinformation für mehr als einen Signalisierungsfunkträger durch dasselbe Signalisierungsfunkträger-Identitäts-Informationselement IE identifiziert wird, dann Wählen einer Instanz einer Signalisierungsfunkträger-Identität ID basierend auf vorgewählten Kriterien.

13. Verfahren gemäß Anspruch 11, das weiter aufweist:
wenn die Konfigurationsinformation für mehr als einen Signalisierungsfunkträger durch dasselbe Signalisierungsfunkträger-Identitäts-Informationselement IE identifiziert wird, dann Zurückweisen des empfangenen Signalisierungsfunkträger-IEs, Übertragen eines Berichts von der Benutzervorrichtung, der das abnormale Informationselement identifiziert und ein neues Signalisierungsfunkträger-Konfigurations-IE anfordert.

14. Verfahren gemäß einem der Ansprüche 11 bis 13, das weiter aufweist:
wenn das empfangene Signalisierungsfunkträger-Konfigurations-IE als ein abnormales Informationselement identifiziert wird, da es dasselbe Identitäts-Informationselement für mehr als einen Signalisierungsfunkträger umfasst, dann Zurückweisen des empfangenen Signalisierungsfunkträger-Konfigurations-IEs und Eintritt in einen Idle-Zustand.

15. Verfahren gemäß einem der Ansprüche 11 bis 14, wobei die Konfigurationsinformation für jeden Signalisierungsfunkträger durch ein Signalisierungsfunkträger-Identitäts-Informationselement IE identifiziert wird, wobei das Verfahren weiter aufweist:
Bestimmen, ob das empfangene Signalisierungsfunkträger-Konfigurations-IE eine Konfigurationsinformation für eine erforderliche minimale Anzahl von Signalisierungsfunkträgern umfasst; und
wenn das empfangene Signalisierungsfunkträger-Konfigurations-IE keine Konfigurationsinformation für eine erforderliche minimale Anzahl von Signalisierungsfunkträgern umfasst, dann Identifizieren des empfangenen Signalisierungsfunkträger-Konfigurations-IEs als abnormales Informationselement.

16. Verfahren gemäß Anspruch 15, das weiter aufweist:
wenn das empfangene Signalisierungsfunkträger-Konfigurations-IE als ein abnormales Informationselement identifiziert wird, da es keine Konfigurationsinformation für die erforderliche minimale Anzahl von Signalisierungsfunkträgern umfasst, dann Konfigurieren von Signalisierungsfunkträgern, die nicht enthalten sind, unter Verwendung von standardmäßigen Konfigurationswerten.

17. Verfahren gemäß Anspruch 15, das weiter aufweist:
wenn das empfangene Signalisierungsfunkträger-Konfigurations-IE als ein abnormales Informationselement identifiziert wird, da es keine Konfigurationsinformation für die erforderliche minimale Anzahl von Signalisierungsfunkträgern umfasst, Übertragen eines Berichts von der Benutzervorrichtung, der ein neues Signalisierungsfunkträger-Konfigurations-IE anfordert.

18. Verfahren gemäß Anspruch 15, das weiter aufweist:
wenn das empfangene Signalisierungsfunkträger-Konfigurations-IE als ein abnormales Informationselement identifiziert wird, da es keine Konfigurationsinformation für die erforderliche minimale Anzahl von Signalisierungsfunkträgern umfasst, dann Ignorieren des empfangenen Signalisierungsfunkträger-Konfigurations-IEs und Eintritt in einen Idle-Zustand.

19. Verfahren gemäß einem der Ansprüche 11 bis 18, wobei die Konfigurationsinformation für jeden Signalisierungsfunkträger durch ein Signalisierungsfunkträger-Identitäts-Informationselement IE identifiziert wird, wobei das Verfahren weiter aufweist:
Bestimmen, ob die empfangene Signalisierungsfunkträger-Konfiguration ein Signalisierungsfunkträger-Identitäts-Informationselement IE für jeden Signalisierungsfunkträger umfasst; und
wenn das empfangene Signalisierungsfunkträger-Konfigurations-IE kein Signalisierungsfunkträger-Identitäts-Informationselement IE für jeden Signalisierungsfunkträger umfasst, dann Identifizieren des empfangenen Signalisierungsfunkträger-Konfigurations-IEs als abnormales Informationselement.

20. Verfahren gemäß Anspruch 19, das weiter aufweist:
wenn das empfangene Signalisierungsfunkträger-Konfigurations-IE als ein abnormales Informationselement identifiziert wird, da es kein Signalisierungsfunkträger-Identitäts-IE für jeden Signalisierungsfunkträger umfasst, dann Übertragen eines Berichts von der Benutzervorrichtung, der ein neues Signalisierungsfunkträger-Konfigurations-IE anfordert.

21. Verfahren gemäß Anspruch 19, das weiter aufweist:
wenn das empfangene Signalisierungsfunkträger-Konfigurations-IE als ein abnormales Informationselement identifiziert wird, da es kein Signalisierungsfunkträger-Identitäts-IE für jeden Signalisierungsfunkträger umfasst, dann Ignorieren des empfangenen Signalisierungsfunkträger-Konfigurations-IEs und Eintritt in einen Idle-Zustand.

22. Verfahren gemäß Anspruch 19, das weiter aufweist:
wenn das empfangene Signalisierungsfunkträger-Konfigurations-IE als ein abnormales Informationselement identifiziert wird, da es kein Signalisierungsfunkträger-Identitäts-IE für jeden Signalisierungsfunkträger umfasst, dann Zuweisen von Standard-Werten für jedes der fehlenden Signalisierungsfunkträger-Identitäts-IEs.

23. Verfahren gemäß Anspruch 22, wobei die Standard-Werte aus einem Satz von Signalisierungsfunkträger-Identitäts-IEs ausgewählt werden, beginnend mit dem ersten unbenutzten Wert.

24. Verfahren gemäß Anspruch 22, wobei die Standard-Werte ausgewählt werden basierend auf der Reihenfolge, in welcher der Signalisierungsfunkträger in dem empfangenen Signalisierungsfunkträger-Konfigurations-IE verzeichnet ist.

25. Verfahren gemäß einem der Ansprüche 11 bis 24, wobei das Signalisierungsfunkträger-Konfigurations-IE eine Aufbau-Signalisierungsfunkträger-Informations-Liste ist, die an die Benutzervorrichtung in einer RRC-Verbindungs-Aufbau-Nachricht übertragen wird.

26. Verfahren gemäß Anspruch 25, wobei das drahtlose Netzwerk ein terrestrisches UMTS(Universal Mobile Telecommunications System)-Funkzugriffsnetzwerk UTRAN umfasst.

27. Verfahren gemäß Anspruch 26, wobei das Signalisierungsfunkträger-Konfigurations-IE durch das UTRAN erzeugt wird und von dem UTRAN an die Benutzervorrichtung übertragen wird.

28. Verfahren gemäß einem der Ansprüche 11 bis 27, wobei die erforderliche minimale Anzahl von Signalisierungsfunkträgern einen ersten Signalisierungsfunkträger SRB 1 umfasst, der verwendet wird für alle Nachrichten, die auf einem zugewiesenen Steuerkanal DCCH (dedicated control channel) übertragen werden, wenn ein unbestätigter Funkverbindungssteuerungs-RLC(radio link control)-Modus RLC-UM (radio link control unacknowledged mode) verwendet wird, einen zweiten Signalisierungsfunkträger SRB2, der verwendet wird für alle Nachrichten, die auf dem DCCH übertragen werden bei der Verwendung des bestätigten RLC-Modus, außer für Funkressourcensteuerungs-RRC(radio resource control)-Nachrichten, die eine höherschichtige Signalisierung tragen, und einen dritten Signalisierungsfunkträger SRB3, der für RRC-Nachrichten verwendet wird, die eine höherschichtige Signalisierung tragen und auf dem DCCH in einem bestätigten RLC-Modus gesendet werden.

29. Verfahren gemäß Anspruch 28, wobei die Konfigurationsinformation ein RLC-Info-Informationselement und ein RB-Abbildungs-Informationselement umfasst.

## Revendications

1. Procédé dans un réseau sans fil comprenant un réseau d'accès radio (100) pour transmettre des informations entre un équipement utilisateur (110) et un réseau central (140), de configuration de supports radio de signalisation dans l'équipement utilisateur, ledit procédé comprenant :
recevoir une instruction pour générer (710) un élément d'information de configuration de support radio de signalisation (510) qui comprend des informations de configuration pour un nombre présélectionné de supports radio de signalisation ;
générer l'élément d'information de configuration de support radio de signalisation, garantir que l'élément d'information de configuration de support radio de signalisation comprend des informations de configuration pour un nombre minimum nécessaire de supports radio de signalisation (740) ; et
transmettre (750) l'élément d'information de configuration de support radio de signalisation du réseau d'accès radio (100) à l'équipement utilisateur (110) pour l'utilisation dans la configuration des supports radio de signalisation dans l'équipement utilisateur (110).

2. Procédé selon la revendication 1, comprenant en outre à :
garantir que chaque support radio de signalisation ne soit pas configuré plus d'une fois.

3. Procédé selon la revendication 2, dans lequel l'information de configuration pour chaque support radio de signalisation est identifiée par un élément d'information d'identité de support radio.

4. Procédé selon l'une des revendications 1 à 3, l'étape de génération comprenant en outre à :
garantir que l'information de configuration pour chaque support radio de signalisation soit identifiée par un élément d'information d'identité de support radio ou que l'information de configuration ne comprenne aucun élément d'information d'identité de support radio.

5. Procédé selon l'une des revendications 1 à 4, dans lequel l'élément d'information de configuration de support radio de signalisation est une Liste d'informations de supports radio de signalisation pour l'établissement, laquelle est transmise à l'équipement utilisateur dans un message d'établissement de liaison RRC.

6. Procédé selon l'une des revendications 1 à 5, dans lequel le réseau sans fil est un réseau sans fil de troisième génération 3G.

7. Procédé selon la revendication 6, dans lequel le réseau sans fil comprend un réseau d'accès radio terrestre UTRAN de système de télécommunication mobile universel UMTS.

8. Procédé selon la revendication 7, dans lequel l'élément d'information de configuration de support radio de signalisation est généré par le réseau UTRAN et est transmis du réseau UTRAN à l'équipement utilisateur.

9. Procédé selon l'une des revendications 1 à 8, dans lequel le nombre minimum nécessaire de supports radio de signalisation comprend un premier support radio de signalisation SRB1 qui est utilisé pour tous les messages transmis sur une voie de commande exclusive DCCH durant l'utilisation de mode avec accusé de réception RLC-UM de commande de liaison radio RLC, un deuxième support radio de signalisation SRB2 qui est utilisé pour tous les messages transmis sur la voie DCCH durant l'utilisation de mode avec accusé de réception de RLC sauf pour des messages de commande de ressource radio RRC portant une signalisation de couche supérieure, et un troisième support radio de signalisation SRB3 qui est utilisé pour des messages RRC portant une signalisation de couche supérieure et transmis sur la voie DCCH en mode avec accusé de réception de RLC.

10. Procédé selon l'une des revendications 8 à 9, dans lequel l'information de configuration comprend un élément d'information RLC Info et un élément d'information RB Mapping.

11. Procédé dans un réseau sans fil comprenant un réseau d'accès radio (100) pour transmettre des informations entre un équipement utilisateur (110) et un réseau central (140), de configuration de supports radio de signalisation dans l'équipement utilisateur, ledit procédé comprenant :
recevoir (810) un élément d'information de configuration de support radio de signalisation (510) avec l'équipement utilisateur, l'élément d'information de configuration de support radio de signalisation comprenant des informations de configuration pour un nombre présélectionné de supports radio de signalisation ;
déterminer (812) si l'information de configuration pour plus d'un support radio de signalisation est identifiée par le même élément d'information d'identité de support radio de signalisation ; et
si l'information de configuration pour plus d'un support radio de signalisation est identifiée par le même élément d'information d'identité de support radio de signalisation, identifier alors (818) l'élément d'information de configuration de support radio de signalisation reçue comme un élément d'information anormal.

12. Procédé selon la revendication 11, comprenant en outre :
si l'information de configuration pour plus d'un support radio de signalisation est identifiée par le même élément d'information d'identité de support radio de signalisation, sélectionner alors un cas d'identité de support radio de signalisation ID sur la base d'un critère présélectionné.

13. Procédé selon la revendication 11, comprenant en outre :
si l'information de configuration pour plus d'un support radio de signalisation est identifiée par le même élément d'information d'identité de support radio de signalisation, rejeter l'élément d'information de support radio de signalisation reçu, transmettre un rapport à partir de l'équipement utilisateur qui identifie l'élément d'information anormal et demande un nouvel élément d'information de configuration de support radio de signalisation.

14. Procédé selon l'une des revendications 11 à 13, comprenant en outre :
si l'élément d'information de configuration de support radio de signalisation est identifié comme un élément d'information anormal du fait qu'il comprend le même élément d'information d'identité pour plus d'un support radio de signalisation, rejeter alors l'élément d'information de configuration de support radio de signalisation reçu et passer dans un état de disponibilité.

15. Procédé selon l'une des revendication 11 à 14, dans lequel l'information de configuration pour chaque support radio de signalisation est identifiée par un élément d'information d'identité de support radio de signalisation, comprenant en outre :
déterminer si l'élément d'information de configuration de support radio de signalisation reçu comprend des informations de configuration pour un nombre minimum nécessaire de supports radio de signalisation ; et
si l'élément d'information de configuration de support radio de signalisation reçu ne comprend pas des informations de configuration pour le nombre minimum nécessaire de supports radio de signalisation, identifier alors l'élément d'information de configuration de support radio de signalisation reçu comme un élément d'information anormal.

16. Procédé selon la revendication 15, comprenant en outre :
si l'élément d'information de configuration de support radio de signalisation reçu est identifié comme un élément d'information anormal parce qu'il ne comprend pas des informations de configuration pour le nombre minimum nécessaire de supports radio de signalisation, configurer alors des supports radio de signalisation qui ne sont pas inclus en utilisant des valeurs de configuration par défaut.

17. Procédé selon la revendication 15, comprenant en outre :
si l'élément d'information de configuration de support radio de signalisation reçu est identifié comme un élément d'information anormal parce qu'il ne comprend pas des informations de configuration pour le nombre minimum nécessaire de supports radio de signalisation, transmettre alors un rapport à partir de l'équipement utilisateur qui demande un nouvel élément d'information de configuration de support radio de signalisation.

18. Procédé selon la revendication 15, comprenant en outre à :
si l'élément d'information de configuration de support radio de signalisation reçu est identifié comme un élément d'information anormal parce qu'il ne comprend pas des informations de configuration pour le nombre minimum nécessaire de supports radio de signalisation, ignorer alors l'élément d'information de configuration de support radio de signalisation reçu et passer dans un état de disponibilité.

19. Procédé selon l'une des revendication 11 à 18, dans lequel l'information de configuration pour chaque support radio de signalisation est identifiée par un élément d'information d'identité de support radio de signalisation, comprenant en outre :
déterminer si l'élément d'information de configuration de support radio de signalisation reçu comprend des informations de configuration pour chaque support radio de signalisation ; et
si l'élément d'information de configuration de support radio de signalisation reçu est identifié comme un élément d'information anormal parce qu'il ne comprend pas un élément d'information d'identité de support radio de signalisation pour chaque support radio de signalisation, identifier alors l'élément d'information de configuration de support radio de signalisation reçu comme un élément d'information anormal.

20. Procédé selon la revendication 19, comprenant en outre :
si l'élément d'information de configuration de support radio de signalisation reçu est identifié comme un élément d'information anormal parce qu'il ne comprend pas un élément d'information d'identité de support radio de signalisation pour chaque support radio de signalisation, transmettre alors un rapport à partir de l'équipement utilisateur qui demande un nouvel élément d'information de configuration de support radio de signalisation.

21. Procédé selon la revendication 19, comprenant en outre :
si l'élément d'information de configuration de support radio de signalisation reçu est identifié comme un élément d'information anormal parce qu'il ne comprend pas un élément d'information d'identité de support radio de signalisation pour chaque support radio de signalisation, ignorer alors l'élément d'information de configuration de support radio de signalisation reçu et passer dans un état de disponibilité.

22. Procédé selon la revendication 19, comprenant en outre :
si l'élément d'information de configuration de support radio de signalisation reçu est identifié comme un élément d'information anormal parce qu'il ne comprend pas un élément d'information d'identité de support radio de signalisation pour chaque support radio de signalisation, attribuer alors des valeurs par défaut pour chacun des éléments d'information d'identité de support radio de signalisation manquants.

23. Procédé selon la revendication 22, dans lequel les valeurs par défaut sont sélectionnées à partir d'un ensemble d'éléments d'information d'identité de support radio de signalisation

24. Procédé selon la revendication 22, dans lequel les valeurs par défaut sont sélectionnées sur la base de l'ordre dans lequel le support radio de signalisation est listé dans l'élément d'information de configuration de support radio de signalisation reçu.

25. Procédé selon l'une des revendication 11 à 24, dans lequel l'élément d'information de configuration de support radio de signalisation est une Liste d'informations de supports radio de signalisation pour l'établissement, laquelle est transmise à l'équipement utilisateur dans un message d'établissement de liaison RRC.

26. Procédé selon la revendication 25, dans lequel le réseau sans fil comprend un réseau d'accès radio terrestre UTRAN de système de télécommunication mobile universel UMTS.

27. Procédé selon la revendication 26, dans lequel l'élément d'information de configuration de support radio de signalisation est généré par le réseau UTRAN et est transmis du réseau UTRAN à l'équipement utilisateur.

28. Procédé selon l'une des revendications 11 à 27, dans lequel le nombre minimum nécessaire de supports radio de signalisation comprend un premier support radio de signalisation SRB1 qui est utilisé pour tous les messages transmis sur une voie de commande exclusive DCCH durant l'utilisation de mode avec accusé de réception RLC-UM de commande de liaison radio RLC, un deuxième support radio de signalisation SRB2 qui est utilisé pour tous les messages transmis sur la voie DCCH durant l'utilisation de mode avec accusé de réception de RLC sauf pour des messages de commande de ressource radio RRC portant une signalisation de couche supérieure, et un troisième support radio de signalisation SRB3 qui est utilisé pour des messages RRC portant une signalisation de couche supérieure et transmis sur la voie DCCH en mode avec accusé de réception de RLC.

29. Procédé selon la revendication 28, dans lequel l'information de configuration comprend un élément d'information RLC Info et un élément d'information RB Mapping.
